# EUROPEAN PATENT APPLICATION

(11) **EP 4 304 072 A1**
(43) Date of publication of application: **10.01.2024**
(21) Application number: 22762892.2
(22) Date of filing: 04.02.2022
(51) Int. Cl.: H02M 7/48, H02P 27/08

(54) **INVERTER CONTROL DEVICE**

(30) Priority: 03.03.2021 JP 2021033512
(71) Applicant: DENSO CORPORATION, Kariya-city, Aichi 448-8661 (JP)
(72) Inventor: KASHIWAZAKI, Takashi, Nisshin-city, Aichi 470-0111 (JP); YAMADA, Tetsuya, Nisshin-city, Aichi 470-0111 (JP); KUBOTA, Masaru, Kariya-city, Aichi 448-8661 (JP)
(74) Representative: TBK
(86) International application number: PCT/JP2022/004408
(87) International publication number: WO 2022/185835

(57) **Abstract**

A control device (50) for an inverter is provided which is applicable to a rotary electric machine system (100) that includes a multiphase rotary electric machine (10) and an inverter (20) electrically connected to armature windings (11U to 11W) configuring the rotary electric machine, the control device including a control unit that performs switching control of switches (SUH to SWL) of phases configuring the inverter by pulse-width modulation based on a comparison between modulation signals (V*) of the phases displaced by a value, which is obtained by dividing one electrical angle period of the rotary electric machine by the number of the phases of the rotary electric machine, and a carrier signal (SD) to perform drive control of the rotary electric machine, a setting unit that sets a carrier frequency, which is a frequency of the carrier signal, to [M*N*fe], where M is the number of phases of the rotary electric machine, fe is a modulation signal frequency, which is a frequency of the modulation signal, and N is a natural number, and an adjustment unit that adjusts a phase of the carrier signal with respect to the modulation signal so that an intersection (PA, PC) of the modulation signals of two phases does not coincide with the carrier signal.

## Description

### [Cross-Reference to Related Application]

The present application is based on earlier Japanese Patent Application No. 2021-033512 filed on March 3, 2021, the description of which is incorporated herein by reference.

### [Technical Field]

The present disclosure relates to a control device for an inverter which is applied to a rotary electric machine system including a multiphase rotary electric machine and an inverter electrically connected to armature windings configuring the rotary electric machine.

### [Background Art]

This kind of control device performs switching control of switches of phases configuring an inverter to apply currents to armature windings to perform drive control of a rotary electric machine. At this time, according to the change of driving states of the switches, a surge voltage may be generated.

As a control device for reducing the surge voltage, PTL 1 discloses a configuration that changes a parameter such as a modulation percentage in pulse-width modulation so that switching intervals of the phases in changing driving states of the switches are outside a predetermined range based on a time period during which the surge voltage varies. Hence, superposition of surge voltages generated in phase is suppressed.

### [Citation List]

### [Patent Literature]

[PTL 1] JP-A-2011-108365

### [Summary of the Invention]

Meanwhile, in pulse-width modulation, switching control for switches of phases is performed based on a comparison between a modulation signal in each of the phases and a carrier signal. Specifically, a driving state of the switch is changed at an intersection between the modulation signal and the carrier signal, whereby a surge voltage is generated depending on the change of the driving state. Hence, if intersections between the modulation signals of the phases coincide with the carrier signal, that is, if the intersections of the modulation signals coincide with the carrier signal, driving states of the switches of different phases are simultaneously changed, whereby surge voltages generated in the different phase are superimposed on each other.

The present disclosure has been accomplished in view of the above circumstances and mainly aims at providing a control device for an inverter which can suppress superposition of surge voltages generated by different phases.

A means for solving the above problem provides a control device for an inverter applicable to a rotary electric machine system that includes a multiphase rotary electric machine and an inverter electrically connected to armature windings configuring the rotary electric machine, the control device including: a control unit that performs switching control of switches of phases configuring the inverter by pulse-width modulation based on a comparison between modulation signals of the phases displaced by a value, which is obtained by dividing one electrical angle period of the rotary electric machine by the number of the phases of the rotary electric machine, and a carrier signal to perform drive control of the rotary electric machine; a setting unit that sets a carrier frequency, which is a frequency of the carrier signal, to [M*N*fe], where M is the number of phases of the rotary electric machine, fe is a modulation signal frequency, which is a frequency of the modulation signal, and N is a natural number; and an adjustment unit that adjusts a phase of the carrier signal with respect to the modulation signal so that an intersection (PA, PC) of the modulation signals of two phases does not coincide with the carrier signal.

A rotary electric machine system including a rotary electric machine and an inverter performs switching control of switches of phases configuring the inverter to perform drive control of the rotary electric machine. The switching control is performed by pulse-width modulation based on a comparison between modulation signals of the phases and a carrier signal. Here, if a driving state of the switch is changed at an intersection between a modulation signal of two phase and the carrier signal, a surge voltage is generated depending on the change of the driving state. Hence, if an intersection between the modulation signals of two phases coincides with the carrier signal, driving states of the switches of different phases are simultaneously changed, whereby surge voltages generated in the different phase are superimposed on each other.

Thus, in the above configuration, the carrier frequency, which is a frequency of the carrier signal, is set to [M*N*fe], where M is the number of phases of the rotary electric machine, fe is a modulation signal frequency, which is a frequency of the modulation signal, and N is a natural number. The modulation signals of the phases are displaced by a value, which is obtained by dividing one electrical angle period of the rotary electric machine by the number of the phases of the rotary electric machine, that is, has a phase difference based on the number of phases of the rotary electric machine. Hence, the timing at which an intersection between the modulation signals of two phases appears is determined based on the timing based on the modulation signals and the number of phases of the rotary electric machine. The timing based on the modulation signal is, for example, a timing at which the modulation signal becomes a local maximum value or a timing at which the modulation signal becomes a local minimal value and is determined from the modulation signal frequency. Hence, setting the carrier frequency based on the modulation signal frequency and the number of phases of the rotary electric machine can keep a relative positional relationship between the intersection of the modulation signals and the carrier signal constant. In a state in which the relative positional relationship is kept, adjusting the phase of the carrier signal with respect to the modulation signal so that the intersection between the modulation signals of two phases does not coincide with the carrier signal can suppress surge voltages generated in different phases from being superimposed on each other.

### [Brief Description of the Drawings]

The above-mentioned and other objects, features and advantages of the present disclosure will become more apparent by reference to the following detailed description taken in conjunction with the accompanying drawings, in which
[FIG. 1] FIG. 1 is a diagram illustrating an overall configuration of a rotary electric machine system;
[FIG. 2] FIG. 2 is a diagram illustrating a signal generation circuit;
[FIG. 3] FIG. 3 is a diagram illustrating a voltage command value and a carrier signal when a command value intersection coincides with the carrier signal;
[FIG. 4] FIG. 4 is a flowchart illustrating a procedure of a setting process;
[FIG. 5] FIG. 5 is a diagram illustrating a voltage command value and a carrier signal when a command value intersection does not coincide with the carrier signal;
[FIG. 6] FIG. 6 is a diagram for describing superposition of surge voltages;
[FIG. 7] FIG. 7 is a diagram illustrating a relationship between a time difference between superimposed surge voltages of two phases, and a maximum value of a superposition value;
[FIG. 8] FIG. 8 is a diagram illustrating a relationship between a command value frequency and a carrier frequency;
[FIG. 9] FIG. 9 is a diagram illustrating a voltage command value and a carrier signal when a first natural number and a second number are odd numbers; and
[FIG. 10] FIG. 10 is a diagram illustrating a voltage command value and a carrier signal when the first natural number is an odd number and the second number is an even number.

### [Description of Embodiments]

### <First embodiment>

Hereinafter, a first embodiment embodying a rotary electric machine system according to the present disclosure will be described with reference to the drawings.

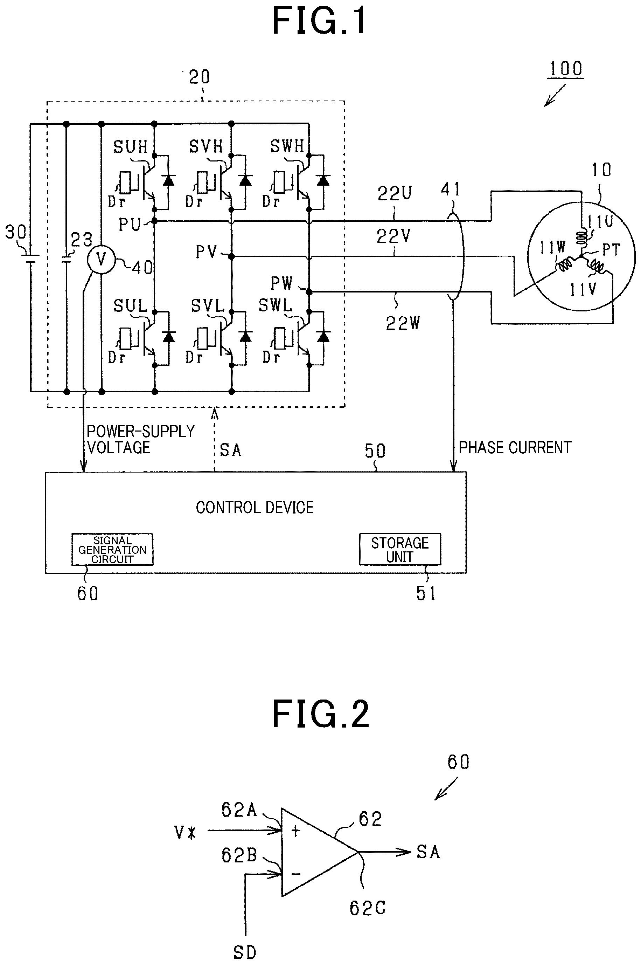

As illustrated in FIG. 1, a rotary electric machine system 100 includes a rotary electric machine 10 and an inverter 20. In the present embodiment, the rotary electric machine 10 is a brushless synchronous machine, for example, a permanent magnet synchronous machine. The rotary electric machine 10 includes U, V, W phase windings 11U, 11V, 11W, which are three-phase armature windings.

The rotary electric machine 10 is connected to a battery 30, which is a DC power source, via the inverter 20. The inverter 20 includes a series connection body of upper arm switches SUH, SVH, SWH and lower arm switches SUL, SVL, SWL. On a U-phase, a connecting point PU between the lower arm switches SUH and SUL is electrically connected (hereinafter, simply "connected") with a first end of a U-phase winding 11U via a U-phase conductive member 22U. On a V-phase, a connecting point PV between the lower arm switches SVH and SVL is connected with a first end of a V-phase winding 11V via a U-phase conductive member 22V. On a W-phase, a connecting point PW between the lower arm switches SWH and SWL is connected with a first end of a W-phase winding 11W via a W-phase conductive member 22W. Second ends of the U-, V-, W-phase windings 11U, 11V, 11W are connected at a neutral point PT. It is noted that the conductive members 22U, 22V, 22W of the respective phases are, for example, cables or bus bars.

In the present embodiment, as the switches SUH to SWL, voltage control type semiconductor switching elements, more specifically, IGBTs are used. Each of the switches SUH to SWL is connected with a free-wheel diode in inverse parallel.

The inverter 20 includes, on an input side thereof, a capacitor 23 that smooths input voltage of the inverter 20. At a high-potential side terminal of the capacitor 23, a positive terminal of the battery 30 is connected. At a low-potential side terminal of the capacitor 23, a negative terminal of the battery 30 is connected. At the high-potential side terminal of the capacitor 23, collectors, which are high-potential side terminals of the upper arm switches SUH to SWH, are connected. At the low-potential side terminal of the capacitor 23, emitters, which are low-potential side terminals of the lower arm switches SUL to SWL, are connected. It is noted that the capacitor 23 may be provided outside the inverter 20.

The rotary electric machine system 100 includes a voltage sensor 40 and a current sensor 41. The voltage sensor 40 detects a power-supply voltage, which is a terminal voltage of the capacitor 23. The current sensor 41 detects phase currents of at least two phases included in phase currents flowing to the rotary electric machine 10. Detection values of the sensors 40, 41 are output to a control device 50 included in the rotary electric machine 10.

In order to perform drive control of the rotary electric machine 10, the control device 50 performs switching control of the switches SUH to SWL configuring the inverter 20 to control a controlled variable of the rotary electric machine to a command value of 10. In the present embodiment, the controlled variable is torque. While dead times DT intervene, in order to alternately turn on the upper and lower arm switches, the control device 50 outputs driving signals SA corresponding to the upper and lower arm switches to driving circuits Dr individually provided to the upper and lower arm switches. The driving signals SA provide an on command or an off command.

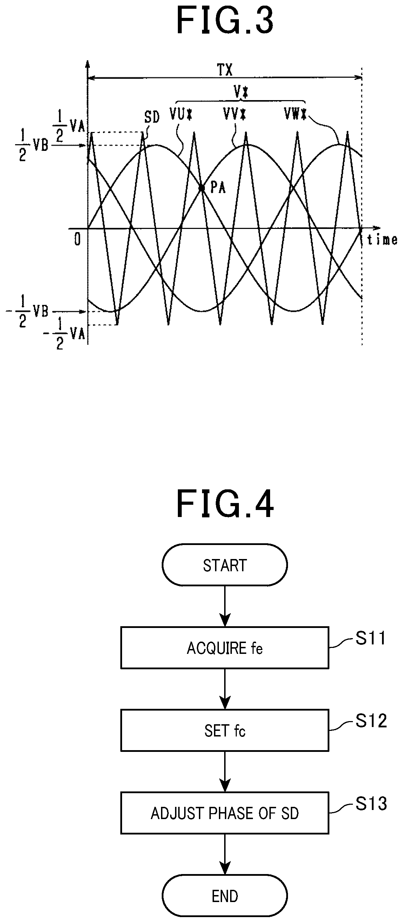

Next, with reference to FIGs. 2 and 3, a method of generating the driving signal SA will be described. FIG. 2 illustrates a circuit configuration of a signal generation circuit 60 that generates the driving signals SA. The signal generation circuit 60 is provided in the control device 50.

The driving signal SA is generated based on a voltage command value V* as a modulation signal and a carrier signal SD. FIG. 3 illustrates the voltage command value V* for one electrical angle period TX of the rotary electric machine 10 and the carrier signal SD. The signal generation circuit 60 uses three-phase voltage command values V* (VU*, VV*, VW*). Phases of the voltage command values V* in the phases are displaced by an electrical angle of 120°, that is, the value obtained by dividing 360°, which is one electrical angle period of the rotary electric machine 10, by 3, which is the number of phases of the rotary electric machine 10. In each of the phases, a common carrier signal SD is used.

It is noted that the carrier signal SD of the present embodiment is a triangular wave signal having an amplitude of VA and a median of zero volts. The triangular wave signal alternately repeats a local maximum value and a local minimal value. In the triangular wave signal of the present embodiment, an absolute value of a rate at which voltage increases from the local minimal value to the local maximum value and an absolute value of a rate at which voltage decreases from a local maximum value to a local minimal value are set to be equal. In addition, the voltage command value V* of the present embodiment is a sinusoidal signal having an amplitude of VB and a median of zero volts. In the present embodiment, the zero volts is an example of a reference voltage. Instead of the sinusoidal signal, a signal obtained by superimposing the third harmonic signal on a sinusoidal signal may be used as the voltage command value V*.

The signal generation circuit 60 performs pulse-width modulation based on a comparison between magnitudes of the voltage command value V* and the carrier signal SD to generate the driving signals SA. As illustrated in FIG. 2, a non-inverted input terminal 62A of the comparator 62 receives the voltage command value V*. An inverted input terminal 62B of the comparator 62 receives the carrier signal SD. The comparator 62 outputs, from an output terminal 62C, the driving signals SA that becomes an on command if the voltage command value V* is greater than the carrier signal SD and becomes an off command if the voltage command value V* is less than the carrier signal SD. In the present embodiment, the signal generation circuit 60 corresponds to a control unit.

In each of the phases, the driving signals SA are output to the driving circuits Dr individually provided to the upper and lower arm switches. Each of the driving circuits Dr provided to the upper and lower arm switches sets the dead time DT based on the driving signal SA and performs switching control so that the upper and lower arm switches are alternately turned on. According to the switching control, driving states of the switches SUH to SWL are changed.

Under the switching control, the driving states of the switches SUH and SWL are changed in the vicinity of the timing at which the voltage command value V* and the carrier signal SD intersect, and surge voltage is generated according to the changes of the driving states. When the surge voltage has increased, and overvoltage has been applied to the windings 11U, 11V, 11W of the phases of the rotary electric machine 10, partial discharge may occur between the windings adjacent to each other and cause degradation of the rotary electric machine 10.

A cause of the increase in the surge voltage is superposition of surge voltages. As illustrated in FIG. 3, a U-phase voltage command value VU* and a V-phase voltage command value VV* intersect at a command value intersection PA. If the command value intersection PA coincides with the carrier signal SD, the timings at which the driving states of the U-phase upper and lower arm switches SUH, SUL and the V-phase upper and lower arm switches SVH, SVL are changed become the same or close to each other, whereby a superimposed value of the surge voltages generated in the U phase and V phase increases.

Hence, in the present embodiment, a carrier frequency fc, which is a frequency of the carrier signal SD, has set based on a command value frequency fe, which is a frequency of the voltage command value V*. Thus, the coincidence between the command value intersection and the carrier signal SD is suppressed, whereby the superposition of the surge voltages generated in different phases is suppressed. In the present embodiment, the command value frequency fe corresponds to a modulation signal frequency.

Next, with reference to FIG. 4, a procedure of a setting process performed by the control device 50 will be described. For example, the control device 50 performs the setting process at predetermined time periods while the rotary electric machine 10 is being driven.

On starting the setting process, in step S11, the command value frequency fe of the voltage command value V* is acquired, and the process proceeds to step S12.

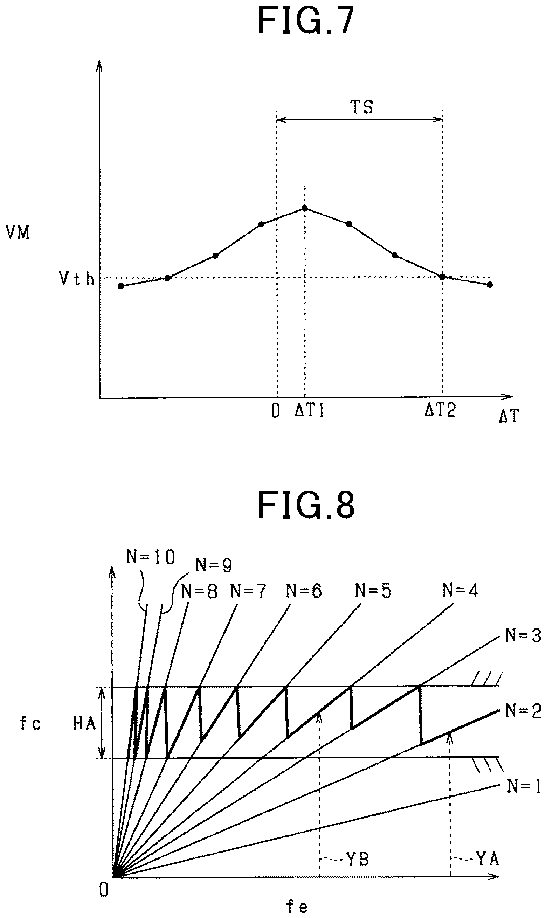

In step S12, the carrier frequency fc is set based on the command value frequency fe acquired in step S11, and the process proceeds to step S13. A storage unit 51 provided to the control device 50 stores the number 3 of the phases of the rotary electric machine 10. A memory as the storage unit 51 is a non-transitory tangible recording medium other than a ROM (e.g., a non-volatile memory other than a ROM). In step S12, the carrier frequency fc is set to [3*N*fe] using the number 3 of the phases of the rotary electric machine 10, the command value frequency fe, and a natural number N. A method of setting the natural number N will be described later with reference to FIG. 8. In the present embodiment, the processing in step S12 corresponds a setting unit.

In step S13, a phase of the carrier signal SD with respect to the voltage command value V* of any of the three phases is adjusted so that the command value intersection does not coincide with the carrier signal SD, and the setting process is ended. In the present embodiment, the processing in step S13 corresponds an adjustment unit.

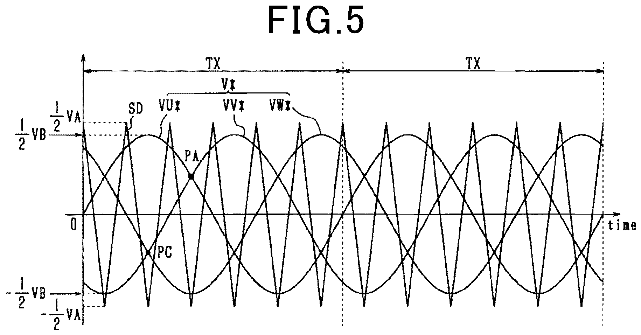

Subsequently, in FIG. 5, an example of the carrier signal SD set by the setting process will be described. FIG. 5 illustrates the voltage command value V* for two electrical angle periods 2TX of the rotary electric machine 10 and the carrier signal SD. As illustrated in FIG. 5, the voltage command values V* of the respective phases have a phase difference of an electrical angle of 120° for each of the phases, that is, a phase difference based on the number of phases 3 of the rotary electric machine 10. Hence, the timing at which a command value intersection appears, is determined based on the timing, which is based on the voltage command value V*, and the number of phases 3 of the rotary electric machine 10. The timing based on the voltage command value V* is, for example, a timing at which the voltage command value V* becomes a local maximum value, a timing at which the voltage command value V* becomes a minimal value, or a zero-crossing timing at which the voltage of the voltage command value V* becomes zero volts, and is determined based on the command value frequency fe. For example, the timing at which the command value intersection PA appears is set to a central timing between the timing at which the U-phase voltage command value VU* becomes a local maximum value and the timing at which the V-phase voltage command value VV* becomes a local maximum value.

Hence, setting the carrier frequency fc based on the command value frequency fe and the number 3 of phases of the rotary electric machine 10 can keep a relative positional relationship between the command value intersection and the carrier signal constant. Thus, during the electrical angle period TX, adjusting the phase of the carrier signal SD so that the command value intersection does not coincide with the carrier signal SD can thereafter make the command value intersection not coincide with the carrier signal SD. In the example illustrated in FIG. 5, during the former electrical angle period TX, the phase of the carrier signal SD is adjusted so that at all the command value intersections including the command value intersection PA do not coincide with the carrier signal SD. As a result, even during the later electrical angle period TX, adjustment is made so that neither of the command value intersections coincide with the carrier signal SD. As a result, surge voltages generated in different phases can be suppressed from being superimposed on each other.

Next, a phase adjustment method for the carrier signal SD in the processing in step S13 will be described. In the present embodiment, the phase of the carrier signal SD is adjusted so that the command value intersections do not coincide with the carrier signal SD, and is adjusted based on a reference time period TS.

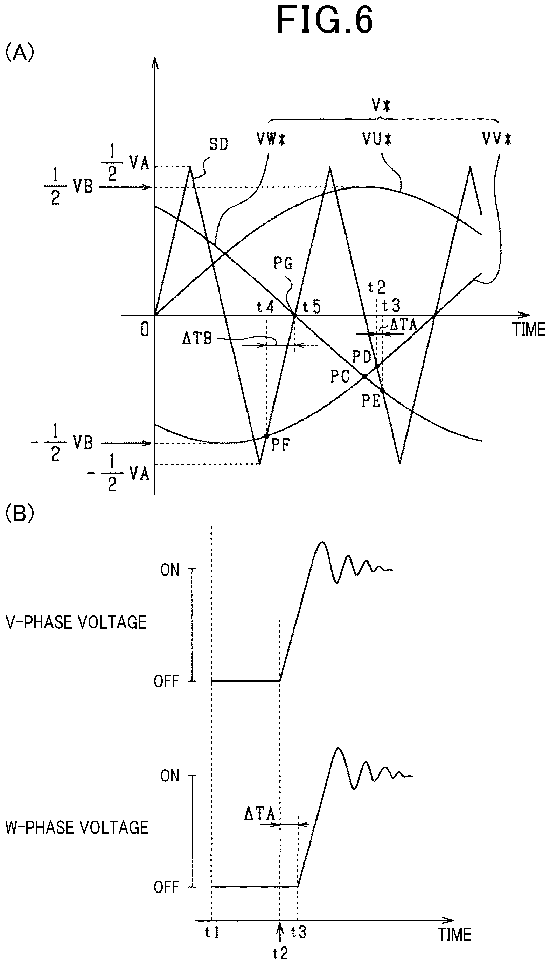

With reference to FIG. 6 and FIG. 7, the reference time period TS will be described. FIG. 6 (A) illustrates the carrier signal SD adjusted so as not to coincide with the command value intersections. In the example illustrated in FIG. 6 (A), the carrier signal SD does not coincide with a command value intersection PC, which is an intersection between the V-phase voltage command value VV* and a W-phase voltage command value VW*. However, immediately after the command value intersection P, the carrier signal SD continuously intersects with the voltage command value VV*, which is a first modulation signal, and the voltage command value VW*, which is a second modulation signal.

FIG. 6(B) illustrates changes of a V-phase voltage applied to the V-phase winding 11V immediately after a command value intersection PC and a W-phase voltage applied to the W-phase winding 11W immediately after the command value intersection PC. At time t1, the V-phase voltage command value VV* and the W-phase voltage command value VW* intersect at the command value intersection PC. Thereafter, at time t2, the V-phase voltage command value VV* and the carrier signal SD intersect with each other at an intersection PD. Hence, the V-phase voltage is changed from an off voltage to an on voltage, thereby generating a surge voltage in the V-phase voltage.

In addition, at time t3 after t2, the W-phase voltage command value VW* and the carrier signal SD intersect with each other at an intersection PE. Hence, the W-phase voltage is changed from an off voltage to an on voltage, thereby generating a surge voltage in the W-phase voltage. As a result, after t3, the surge voltage generated in the V-phase voltage and the surge voltage generated in the W-phase voltage are superimposed on each other. Hereinafter, the total value of the superimposed surge voltages of two phases is referred to as a superimposed value of surge voltages.

The superimposed value of surge voltages changes depending on a time difference ΔT of the superimposed surge voltages of two phases. The time difference ΔT of the surge voltages is equal to a time difference ΔT between crossing timings of the voltage command value V* and the carrier signal SD due to which the surge voltages are generated. Hence, for example, if a first surge voltage, which is one of the superimposed surge voltages of two phases, is generated when a first voltage command value V* and the carrier signal SD intersect with each other at a first timing, and a second surge voltage, which is the other of the superimposed surge voltages of two phase, is generated when a second voltage command value V* different from the first voltage command value V* and the carrier signal SD intersect with each other at a second timing, the time difference ΔT of the surge voltages is a time interval between the first timing and the second timing.

FIG. 7 illustrates a relationship between the time difference ΔT between the superimposed surge voltages of two phases and the maximum value VM of the superposition values. The maximum value VM is a maximum value of the superposition values generated during a time period from the time at which the driving state of the switch is changed to one of an on state and an off state to the time at which the driving state of the switch is changed to the other of the on state and the off state. In FIG. 7, the time difference ΔT between the surge voltages being zero indicates that the superimposed surge voltages of two phases are simultaneously generated. As illustrated in FIG. 7, the maximum value VM of the superposition values increases until the time difference ΔT between the surge voltages becomes a first time difference ΔT1 greater than zero as the time difference ΔT increases, and becomes maximum at the time difference ΔT1. Thereafter, the maximum value VM of the superposition values decreases as the time difference ΔT increases. If the time difference ΔT between the surge voltages becomes a second time difference ΔT2 or greater, the maximum value VM of the superposition values becomes a threshold value Vth or less. The threshold value Vth is a voltage level that can avoid influence of surge voltage. The reference time period TS is set to a time period equal to or longer than the second time difference ΔT2. In the present embodiment, the reference time period TS is set to the second time difference ΔT2.

In addition, as illustrated in FIG. 6(A), the phase of the carrier signal SD is adjusted so that a following difference time period ΔTA from time t2 to time t3 becomes the reference time period TS or longer. The phase of the carrier signal SD is adjusted so that a previous difference time period ΔTB becomes the reference time period TS or longer. The previous difference time period ΔTB is a time period from time t4 of an intersection PF between the V-phase voltage command value VV* and the carrier signal SD immediately before the command value intersection PC to time t5 of an intersection PG between the W-phase voltage command value VW* and the carrier signal SD immediately before the command value intersection PC. In the present embodiment, adjusting the phase of the carrier signal SD so that both of the previous difference time period ΔTB and the following difference time period ΔTA become the reference time period TS or longer can suppress the maximum value VM of the superposition values of the surge voltages generated in the V phase and the W phase from becoming greater than the threshold value Vth immediately before and immediately after the command value intersection PC.

Next, with reference to FIG. 8, a method of setting the natural number N will be described. FIG. 8 illustrates a relationship between the command value frequency fe and the carrier frequency fc when the natural number N is changed from 1 to 10. In the present embodiment, the carrier frequency fc is limited so as to be within a predetermined frequency range HA, and the natural number N is set depending on the command value frequency fe so that the carrier frequency fc is within the predetermined frequency range HA.

Specifically, if the command value frequency fe is acquired, the natural number N is selected by which the carrier frequency fc set by [3*N*fe] is within the predetermined frequency range HA. In an example indicated by an arrow YA in FIG. 8, when the natural number N is 2, the carrier frequency fc is within the predetermined frequency range HA. Hence, the natural number N is set to 2. It is noted that FIG. 8 illustrates an example in which, as indicated by an arrow YB, corresponding to the command value frequency fe, when a plurality (two) of natural numbers N are present by which the carrier frequency fc is within the predetermined frequency range HA, the largest natural number N between the two natural numbers N is selected.

Here, the predetermined frequency range HA is set based on the switching control of the switches SUH to SWL configuring the inverter 20. Specifically, if the carrier frequency fc becomes higher than an upper limit of the predetermined frequency range HA, the number of switching of the switches SUH to SWL increases, which improves controllability of the switching control, whereas heat loss increases. If the carrier frequency fc becomes lower than a lower limit of the predetermined frequency range HA, the number of switching of the switches SUH to SWL decreases, which decreases heat loss in the switching control, whereas controllability lowers. Setting the carrier frequency fc within the predetermined frequency range HA can achieve both controllability and suppression of heat loss in the switching control of the switches SUH to SWL.

According to the present embodiment described above in detail, the following effects can be obtained.
- In the present embodiment, the carrier frequency fc is set to [3 *N*fe] using the number 3 of the phases of the rotary electric machine 10, the command value frequency fe, and the natural number N. Since the voltage command value V* of each phase has a phase difference based on the number 3 of the phases of the rotary electric machine 10, the timing at which the command value intersection appears is determined based on the timing, which is based on the voltage command value V*, and the number 3 of the phases of the rotary electric machine 10. Hence, setting the carrier frequency fc based on the command value frequency fe and the number 3 of the phases of the rotary electric machine 10 can keep a relative positional relationship between the command value intersection and the carrier signal SD constant. In a state in which the relative positional relationship is kept constant, adjusting the phase of the carrier signal SD with respect to the voltage command value V* so that the command value intersection does not coincide with the carrier signal SD can suppress surge voltages generated in different phases from being superimposed on each other.
- In the present embodiment, the phase of the carrier signal SD is adjusted so that the command value intersection does not coincide with the carrier signal SD and is adjusted based on the reference time period TS. Specifically, the previous difference time period ΔTB and the following difference time period ΔTA at the command value intersection PC are calculated to adjust a phase of the carrier signal SD using both of the previous difference time period ΔTB and the following difference time period ΔTA. Hence, immediately before and immediately after the command value intersection PC, superposition of a superposition surge voltage ΔV and a surge voltage can be suppressed.

In addition, the phase of the carrier signal SD is adjusted so that both of the previous difference time period ΔTB and the following difference time period ΔTA are the reference time period TS or longer. Hence, immediately before and immediately after the command value intersection PC, the maximum value VM of the superposition values of the surge voltages can be suppressed from becoming greater than the threshold value Vth.
- In the present embodiment, the natural number N is set depending on the command value frequency fe so that the carrier frequency fc is within the predetermined frequency range HA. Hence, both of the controllability and the suppression of heat loss in the switching control of the switches SUH to SWL configuring the inverter 20 can be achieved.

### (Modifications of first embodiment)

Regarding FIG. 5, an example in which the natural number N is 2 has been described. However, the natural number N is not limited to 2. In this case, the natural number N is preferably an odd number.

As illustrated in FIG. 5, when the carrier signal SD is a triangular wave signal, during an inter-local minimal value time period during which voltage increases from a local minimal value to a local maximal value and then decreases to a local minimal value, the time interval between parts in the carrier signal SD increases as the voltage decreases. During an inter-local maximal value time period during which voltage decreases from a local maximal value to a local minimal value and then increases to a local maximal value, the time interval between parts in the carrier signal SD increases as the voltage increases.

Hence, since voltage at the command value intersection is lower than zero volts when the command value intersection is located between parts of the carrier signal SD during the inter-local minimal value time period, an adjustment margin in phase adjustment of the carrier signal SD becomes higher compared with a case in which the voltage at the command value intersection is higher than zero volts. In addition, since the voltage at the command value intersection is higher than zero volts when the command value intersection is located between parts of the carrier signal SD during the inter-local maximal value time period, the adjustment margin in phase adjustment of the carrier signal SD becomes higher compared with a case in which the voltage at the command value intersection is lower than zero volts. Hereinafter, the condition under which the adjustment margin in phase adjustment of the carrier signal SD becomes high is referred to as a margin condition.

When the natural number N is an even number, the phase of the carrier signal SD cannot be adjusted so that the margin condition is satisfied at all the command value intersections. In the example illustrated in IG. 5, although the command value intersection PA satisfies the margin condition, the command value intersection PC, which is an intersection between the V-phase voltage command value VV* and the W-phase voltage command value VW*, does not satisfy the margin condition. Hence, when the phase of the carrier signal SD is adjusted, if the phase of the carrier signal SD is displaced from an appropriate value, the command value intersection PC coincides with the carrier signal SD, whereby surge voltages generated in different phases are superimposed on each other.

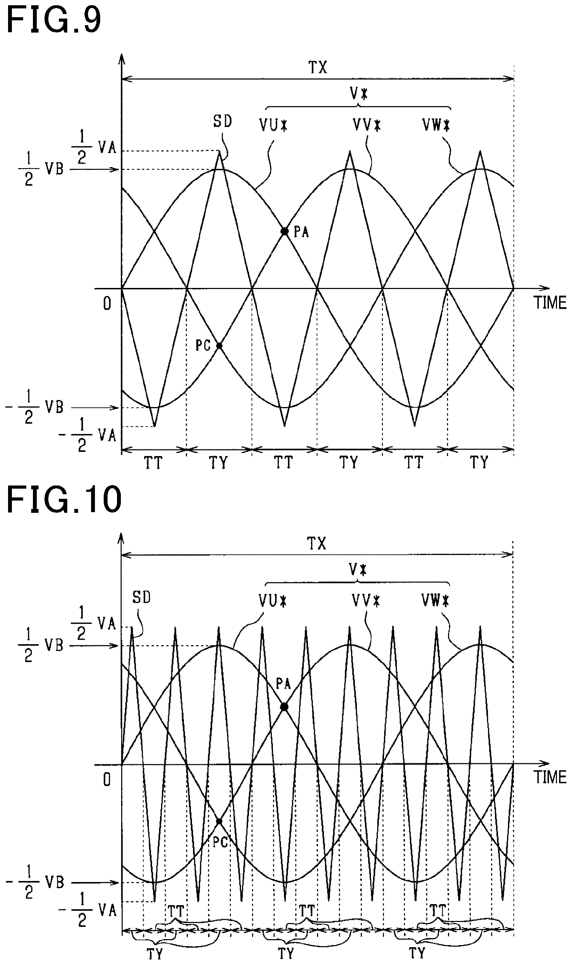

Hence, in the present modification, the natural number N is set to an odd number. FIG. 9 illustrates a positional relationship between the command value intersections PA, PC and the carrier signal SD when the natural number N is an odd number. As illustrated in FIG. 9, when the natural number N is an odd number, the phase of the carrier signal SD can be adjusted so that the margin condition is satisfied at all the command value intersections. Hence, when the phase of the carrier signal SD is adjusted, even if the phase of the carrier signal SD is displaced from an appropriate value, surge voltages generated in different phases can be appropriately suppressed from being superimposed on each other.

When the natural number N is an odd number, the phase of the carrier signal SD is preferably adjusted using a first time period TY and a second time period TT of the carrier signal SD. The first time period TY is a time period during which the voltage of the carrier signal SD is positive, and the second time period TT is a time period during which the voltage of the carrier signal SD is negative.

Specifically, the phase of the carrier signal SD is adjusted so that the command value intersection having a negative voltage such as the command value intersection PC is located in the first time period TY of the carrier signal SD and the command value intersection having a positive voltage such as the command value intersection PA is located in the second time period TT of the carrier signal SD. Specifically, when the natural number N is expressed as [N=2*L-1] using a natural L, the method of adjusting the phase of the carrier signal SD is changed depending on whether the natural L is an even number or an odd number. Hereinafter, to distinguish them, the natural number N is referred to as a first natural number, and the natural number L is referred to as a second natural number.

As illustrated in FIG. 9, when the second natural number L is 1, that is, an odd number, the phase of the carrier signal SD is adjusted so that the start timing of the positive voltage time period of the voltage command value V* becomes equal to the start timing of the second time period TT of the carrier signal SD and the start timing of the negative voltage time period of the voltage command value V* becomes equal to the start timing of the first time period TY of the carrier signal SD.

FIG. 10 illustrates a positional relationship between the command value intersections PA, PC and the carrier signal SD when the second natural number L is 2, that is, an even number. As illustrated in FIG. 10, when the second natural number L is 1 an even number, the phase of the carrier signal SD is adjusted so that the start timing of the positive voltage time period of the voltage command value V* becomes equal to the start timing of the first time period TY of the carrier signal SD and the start timing of the negative voltage time period of the voltage command value V* becomes equal to the start timing of the second time period TT of the carrier signal SD. Hence, the phase of the carrier signal SD can be adjusted depending on the first natural number N so that the adjustment margin is satisfied at all the command value intersection, whereby even if the phase of the carrier signal SD is displaced from an appropriate value, surge voltages generated in different phases can be appropriately suppressed from being superimposed on each other.

### (Second embodiment)

Hereinafter, a second embodiment will be described focusing on differences from the above first embodiment. The present embodiment differs from the second embodiment in that the phase of the carrier signal SD is adjusted based on a phase map MP stored in the storage unit 51.

The phase map MP is correlated information in which the command value frequencies fe and specific phases of the carrier signal SD are associated with each other. The specific phase is one of the phases of the carrier signal SD in which the previous difference time period ΔTB and the following difference time period ΔTA are the reference time period TS or longer at the command value frequency fe associated in the phase map MP, and is previously set and stored in the storage unit 51.

If the previous difference time period ΔTB and the following difference time period ΔTA have to be calculated every time the phase of the carrier signal SD is adjusted, processing load of the control device 50 in the setting process increases.

In this regard, according to the present embodiment described above in detail, the phase map MP in which the command value frequencies fe and specific phases are associated with each other is stored in the storage unit 51. Hence, the phase of the carrier signal SD can be adjusted without calculating the previous difference time period ΔTB and the following difference time period ΔTA, whereby processing load of the control device 50 in phase adjustment of the carrier signal SD can be decreased.

### (Other embodiments)

The present disclosure is not limited to the descriptions of the above embodiments and may be implemented as described below.
- In the above embodiments, the setting process is performed at predetermined intervals. However, this is not the limitation. The setting process may be performed when the command value frequency fe of the voltage command value V* is changed.
- The rotary electric machine 10 is not limited to having three phases but may have two phases, or four or more phases. That is, a multiphase rotary electric machine 10 may be used.
- The carrier signal SD is not limited to a triangular wave signal but may be, for example, a saw tooth signal.
- The switches configuring the inverter 20 are not limited to IGBTs but may be N-channel MOSFETs. In this case, as a diode connected to the switch in inverse parallel, a body diode of the switch may be used.
- The controlled variable of the rotary electric machine 10 is not limited to torque but may be, for example, a rotational speed.
- The control unit and the method executed by the control unit described in the present disclosure may be implemented by a dedicated computer including a processor and a memory programmed to execute one or more functions embodied by computer programs. Alternatively, the control unit and the method executed by the control unit described in the present disclosure may be implemented by a dedicated computer including a processor formed of one or more dedicated hardware logical circuits. Alternatively, the control unit and the method executed by the control unit described in the present disclosure may be implemented by one or more dedicated computers including a combination of a processor and a memory programmed to execute one or more functions and a processor including one or more hardware logical circuits. The computer programs may be stored, as instructions to be executed by a computer, in a computer-readable non-transitory tangible storage medium.

The present disclosure has so far been described based on some embodiments. However, the present disclosure should not be construed as being limited to these embodiments or the structures. The present disclosure should encompass various modifications, or modifications within the range of equivalence. In addition, various combinations and modes, as well as other combinations and modes, including those which include one or more additional elements, or those which include fewer elements should be construed as being within the scope and spirit of the present disclosure.

## Claims

1. A control device (50) for an inverter applicable to a rotary electric machine system (100) that includes a multiphase rotary electric machine (10) and an inverter (20) electrically connected to armature windings (11U to 11W) configuring the rotary electric machine, the control device comprising:
a control unit that performs switching control of switches (SUH to SWL) of phases configuring the inverter by pulse-width modulation based on a comparison between modulation signals (V*) of the phases displaced by a value, which is obtained by dividing one electrical angle period of the rotary electric machine by the number of the phases of the rotary electric machine, and a carrier signal (SD) to perform drive control of the rotary electric machine;
a setting unit that sets a carrier frequency, which is a frequency of the carrier signal, to [M*N*fe], where M is the number of phases of the rotary electric machine, fe is a modulation signal frequency, which is a frequency of the modulation signal, and N is a natural number; and
an adjustment unit that adjusts a phase of the carrier signal with respect to the modulation signal so that an intersection (PA, PC) of the modulation signals of two phases does not coincide with the carrier signal.

2. The control device for an inverter according to claim 1, wherein
if a time period from an intersection between a first modulation signal, which is one of the modulation signals of two phases, and the carrier signal to an intersection between a second modulation signal, which is the other of the modulation signals of two phases, and the carrier signal immediately before a timing at which the modulation signals of the two phases intersect with each other is defined as a previous difference time period (ΔTB), and
if a time period from an intersection between the first modulation signal and the carrier signal to an intersection between the second modulation signal and the carrier signal is defined as a following difference time period (ΔTA),
the adjustment unit adjusts the phase of the carrier signal so that both of the previous difference time period and the following difference time period become a reference time period or more.

3. The control device for an inverter according to claim 2, wherein
if a first surge voltage is generated due to intersection between the first modulation signal and the carrier signal at a first timing and a second surge voltage is generated due to intersection between the second modulation signal and the carrier signal at a second timing,
the reference time period is set in a time interval between the first timing and the second timing during which a maximum value of superposition values of the first surge voltage and the second surge voltage is a threshold value or less.

4. The control device for an inverter according to claim 3, further comprising a storage unit (51) that stores correlated information (MP) in which the modulation signal frequency and the phase of the carrier signal, in which the previous difference time period and the following difference time period become the reference time period or longer, are associated with each other, wherein
the adjustment unit adjusts the phase of the carrier signal based on the modulation signal frequency and the correlated information.

5. The control device for an inverter according to any one of claims 1 to 4, wherein
the modulation signal is a triangular wave signal, and
N is an odd number.

6. The control device for an inverter according claim 5, wherein
When a time period during which the triangular wave signal is higher than a reference voltage, which is a median between a local maximum value and a local minimal value of the triangular wave signal, is defined as a first time period (TY), and a time period during which the triangular wave signal is lower than the reference voltage is defined as a second time period (TT),
the adjustment unit adjusts the phase of the carrier signal so that an intersection of the modulation signals of two phases which is lower than the reference voltage is located in the first time period and an intersection of the modulation signals of two phases which is higher than the reference voltage is located in the second time period.

7. The control device for an inverter according claim 6, wherein
the modulation signal is a signal that varies at the modulation signal frequency centering on the reference voltage, and
when L is a positive odd number, and N is [2*L-1], the adjustment unit adjusts the phase of the carrier signal so that a start timing of a time period during which the modulation signal is higher than the reference voltage is equal to a start timing of the second time period and a start timing of a time period during which the modulation signal is lower than the reference voltage is equal to a start timing of the first time period.

8. The control device for an inverter according claim 6, wherein
the modulation signal is a signal that varies at the modulation signal frequency centering on the reference voltage, and
when L is a positive even number, and N is [2*L-1], the adjustment unit adjusts the phase of the carrier signal so that a start timing of a time period during which the modulation signal is higher than the reference voltage is equal to a start timing of the first time period and a start timing of a time period during which the modulation signal is lower than the reference voltage is equal to a start timing of the second time period.

9. The control device for an inverter according any one of claims 1 to 8, wherein
the setting unit sets N depending on the modulation signal frequency so that the carrier signal is within a predetermined frequency range.
